# EUROPEAN PATENT APPLICATION

(11) **EP 4 345 672 A1**
(43) Date of publication of application: **03.04.2024**
(21) Application number: 23192513.2
(22) Date of filing: 21.08.2023
(51) Int. Cl.: G06F 30/15, G06F 30/23, G06F 113/26

(54) **METHOD OF DESIGNING AIRCRAFT PART AND METHOD OF PRODUCING AIRCRAFT PART**

(30) Priority: 28.09.2022 JP 2022155485
(71) Applicant: Subaru Corporation, Tokyo 150-8554 (JP)
(72) Inventor: AOKI, Kazuyuki, Tokyo, 150-8554 (JP)
(74) Representative: Vossius & Partner Patentanwälte Rechtsanwälte mbB

(57) **Abstract**

A method of designing an aircraft part includes: simulating the aircraft part to be designed with a finite element method analysis model consisting of elements (S4); and creating design information for the aircraft part by determining strengths of the elements by finite element method analysis targeting the finite element method analysis model (S10). Each of the strengths of the elements is within an allowable range even when any of possible loads is applied to each of the elements. The possible loads are represented by combinations of three component forces by using the finite element method analysis model in which the elements are arrayed in two-dimensional directions. Whether the each of the strengths of the elements is within the allowable range is confirmed only in cases where the combinations of the three component forces are critical combinations (S8).

## Description

### FIELD

Embodiments described herein relate generally to a method of designing an aircraft part and a method of producing an aircraft part.

### BACKGROUND

When design of an aircraft part is completed, the strength of the designed aircraft part is calculated to confirm whether the strength of the aircraft part is sufficient. The calculated strength of the aircraft part is evaluated under various possible conditions including not only a case where an aircraft is flying under various flight conditions, such as altitudes, speeds and accelerations of the aircraft, but also a case where the aircraft receives loads on the ground.

The maximum load expected to be applied to an aircraft part during operation of an aircraft is called the limit load. The load obtained by multiplying the limit load by a safety factor of 1.5 is called the ultimate load. The strength of each aircraft part is required to be within a permissible range even when the ultimate load is applied. That is, each portion of an aircraft part is given a strength margin. Therefore, whether the strength of an aircraft part is sufficient can be confirmed by calculating the strength margin in each portion.

There are thousands of load patterns that may be applied to an aircraft and it is necessary to ensure that the strength is sufficient for all the cases. Nevertheless, it is impractical to calculate the strength margin for an aircraft part for all of the great many cases. Therefore, the strength margin of each aircraft part is calculated only for typical cases where large loads are applied.

Note that, as a technique related to strength calculation of an aircraft part, a device for calculating loads on an aircraft part is known (for example, refer to Japanese Patent Application Publication JP2020-098136A).

An object of the present invention is to simplify strength calculation of an aircraft part more.

### SUMMARY

In general, according to one embodiment, a method of designing an aircraft part includes: simulating the aircraft part to be designed with a finite element method analysis model consisting of elements; and creating design information for the aircraft part by determining strengths of the elements by finite element method analysis targeting the finite element method analysis model. Each of the strengths of the elements is within an allowable range even when any of possible loads is applied to each of the elements. The possible loads are represented by combinations of three component forces by using the finite element method analysis model in which the elements are arrayed in two-dimensional directions. Whether the each of the strengths of the elements is within the allowable range is confirmed only in cases where the combinations of the three component forces are critical combinations.

Further, according to one embodiment, a method of producing the aircraft part includes producing the aircraft part based on the design information created by the above-mentioned method of designing the aircraft part.

### BRIEF DESCRIPTION OF THE DRAWINGS

In the accompanying drawings:
FIG. 1 is a flow chart showing a flow of a method of designing an aircraft part and a method of producing an aircraft part according to an embodiment of the present invention;
FIG. 2 shows an example of a 2D-FEM (two-dimensional Finite Element Method) analysis model of a main wing of an aircraft;
FIG. 3 shows the three component forces (S, M, T) generated on a main wing of an aircraft when aerodynamic force acts on the main wing;
FIG. 4 is a graph plotting combinations of bending moments M and shear stresses S that may be generated in the main wing;
FIG. 5 is a graph plotting combinations of torques T and shear stresses S that may be generated in the main wing;
FIG. 6 shows the three component forces (Nx, Ny, Nxy) applied to each element of the FEM analysis model shown in FIG. 2;
FIG. 7 is a graph showing an example of combinations of the three component forces (Nx, Ny, Nxy) plotted in a 3D (three-dimensional) coordinate space, corresponding to load cases each applied to the element of interest in the FEM analysis model; and
FIG. 8 is a graph showing an example of obtaining the 3D convex hull of the point cloud data consisting of the three component forces (Nx, Ny, Nxy) shown in FIG. 7.

### DETAILED DESCRIPTION

A method of designing an aircraft part and a method of producing an aircraft part according to embodiments of the present invention will be described with reference to accompanying drawings.

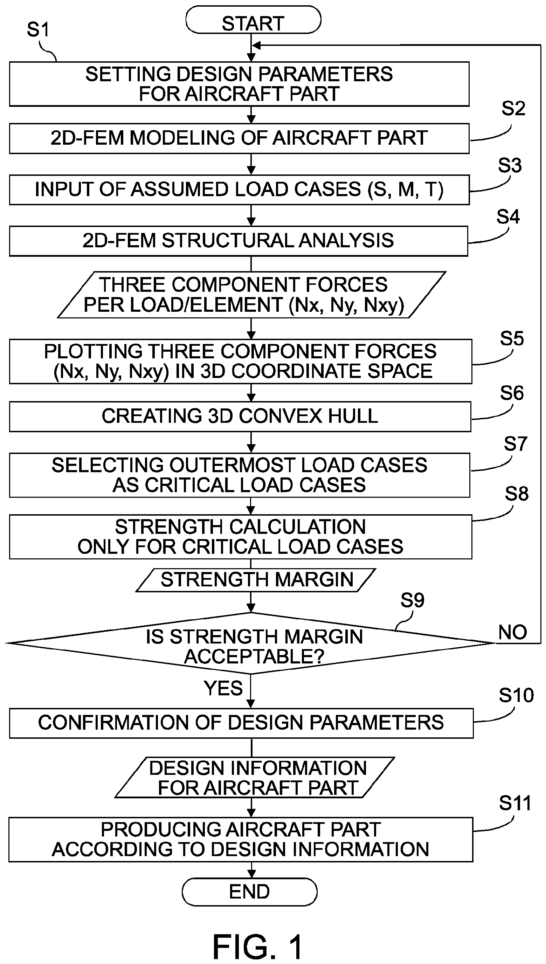

FIG. 1 is a flow chart showing a flow of a method of designing an aircraft part and a method of producing an aircraft part according to an embodiment of the present invention.

Under the method of designing the aircraft part, such as a main wing of an aircraft, design information for the aircraft part is created by determining design parameters representing the design information for the aircraft part, and subsequently confirming safety by calculating the strength of the aircraft part specified by the determined design parameters. Under the method of producing the aircraft part, the aircraft part is produced based on the created design information of the aircraft part.

Hereinafter, a case where the aircraft part is a main wing of a fixedwing aircraft will be described mainly as an example. As a matter of course, not only an aircraft part, such as a tail wing or a fuselage, other than the main wing, but also an aircraft part of a rotorcraft may be targeted.

First, in step S1, the values of many parameters representing the design information of the aircraft part are set. A main wing of a fixedwing aircraft has box structure in which upper and lower skins (panels) are reinforced with reinforcing members, such as spars, ribs, and stringers. Therefore, the values of various parameters, including the thicknesses, positions, cross-sectional areas, cross-sectional shapes, and materials of the skins and the reinforcing members as well as the presence or absence of honeycomb structure, are set.

In recent years, not only a metal, such as aluminum or titanium, but also an FRP, such as glass fiber reinforced plastic (GFRP) or carbon fiber reinforced plastic (CFRP), is often used as a material for an aircraft part.

A typical FRP consists of laminated fiber reinforced plies of which the orientation angles of the fibers are 0°, 45°, 90° and/or -45°. Therefore, an FRP has various lamination structures like unidirectional laminates, angle ply laminates and symmetric laminates. The unidirectional laminates consist of fiber reinforced plies laminated so that all the orientation angles of the fibers may be in a same direction. The angle ply laminates consist of fiber reinforced plies laminated with a combination of positive and negative orientation angles of the fibers. The symmetric laminates consist of fiber reinforced plies laminated so that the orientation angles of the fibers may be symmetrical in the thickness direction. Therefore, when an FRP is selected as a material of at least a portion, orientation angles of fibers in fiber reinforced plies and a lamination order of fiber reinforced plies are also included in the design parameters.

Once the values have been set for all the design parameters, preliminary design of the aircraft part is completed. When the design of the aircraft part is completed, it is necessary to calculate the strength of the aircraft part to check whether the strength is sufficient. The strength of the aircraft part is calculated to determine whether the strength is sufficient under various possible conditions including not only a case where the aircraft is flying under various flight conditions, such as altitudes, speeds and accelerations of the aircraft, but also a case where the aircraft receives loads on the ground.

In particular, when at least a portion of the aircraft part is made of an FRP having anisotropic strength, it is necessary to evaluate the strength of each portion of the aircraft part. Therefore, the strength calculation of the aircraft part is performed by FEM analysis.

For that purpose, in step S2, the aircraft part to be designed is simulated with an FEM analysis model consisting of elements.

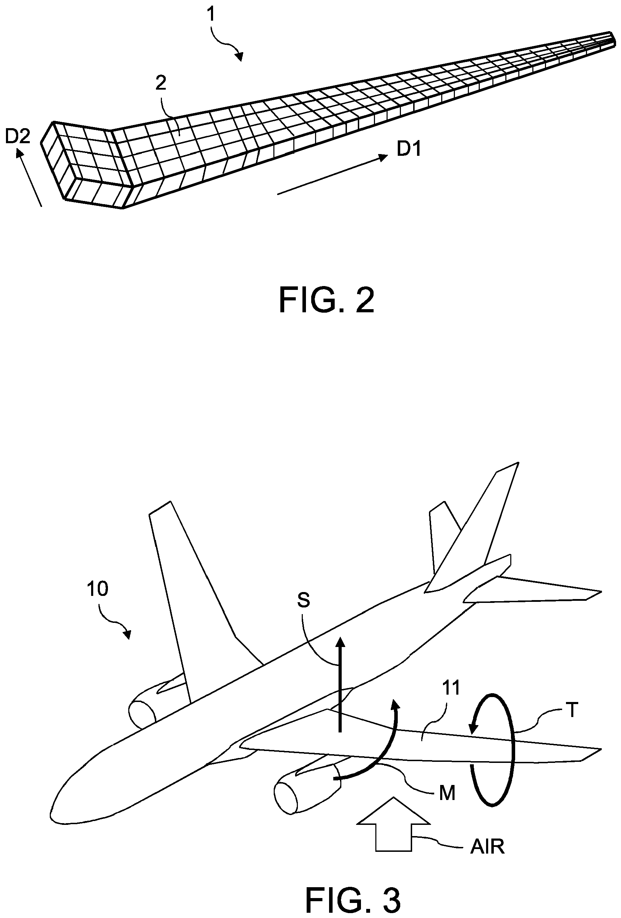

FIG. 2 shows an example of a 2D-FEM analysis model 1 of a main wing of an aircraft.

As shown in FIG. 2, the aircraft part, such as the main wing of the aircraft, can be simulated with the 2D-FEM analysis model 1. That is, the aircraft part can be simulated with the 2D-FEM analysis model 1 in which the elements 2 are disposed in 2D directions.

As long as the array directions of the divided elements 2 in the FEM analysis model 1 are appropriate 2D directions, a load applied to each element 2 can be represented by a combination of three component forces. For example, when the main wing of the aircraft is simulated with the 2D-FEM analysis model 1 as exemplified in FIG. 2, the main wing can be divided into the elements 2 not in the thickness direction of the main wing, but roughly in a length direction D1 of the main wing and a direction D2 crossing the length direction of the main wing according to the shape of the main wing. Note that, the directions D1 and D2 in which the elements 2 are arrayed are not usually straight lines, similarly to a typical FEM analysis model,

When the FEM analysis model 1 of the aircraft part has the elements 2 arrayed in 2D directions, the load applied to each element 2 can be represented by the three component forces consisting of stresses in the two directions due to pressure applied from the elements 2 adjacent in the two directions and a shear stress due to shear force applied from the elements 2 adjacent in the length direction of the main wing. Therefore, it is possible to evaluate the strength of each element 2, based on the load represented by the three component forces.

Next, in step S3, all the load cases which may be applied to the aircraft and the aircraft part are determined and then input into the FEM analysis software.

FIG. 3 shows the three component forces (S, M, T) generated on a main wing 11 of an aircraft 10 when aerodynamic force acts on the main wing 11.

As shown in FIG. 3, when aerodynamic force acts on the main wing 11 of the aircraft 10, a load according to the aerodynamic force is applied to the main wing 11. The load applied to the main wing 11 can be represented by the three component forces consisting of the shear stress S, the bending moment M and the torque T.

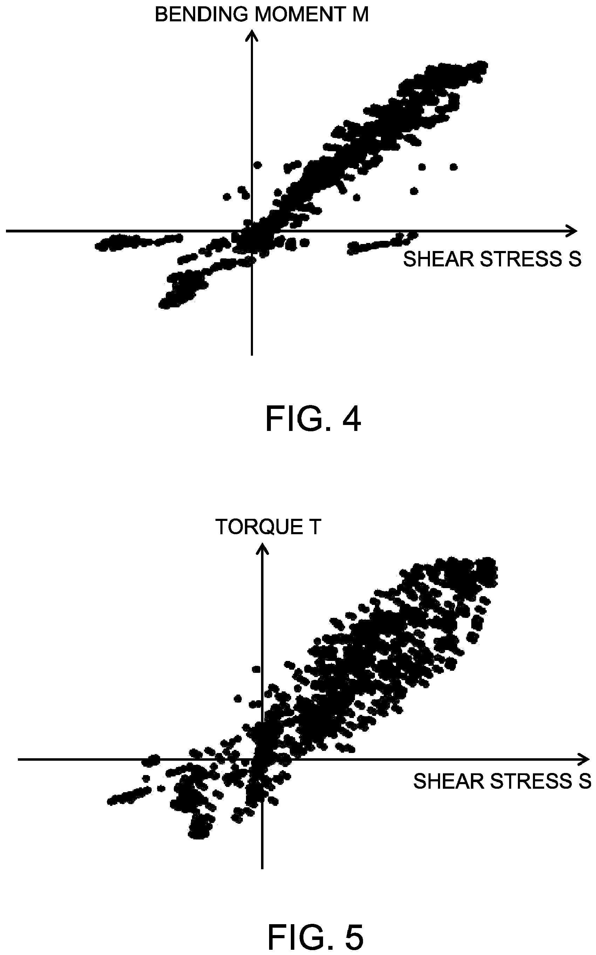

FIG. 4 is a graph plotting combinations of bending moments M and shear stresses S that may be generated in the main wing 11. FIG. 5 is a graph plotting combinations of torques T and shear stresses S that may be generated in the main wing 11.

The load, applied to the main wing, which is expressed as a combination of the shear stress S, the bending moment M and the torque T, changes according to the flight conditions of the aircraft and the like. Thus, there are thousands of possible load cases, as illustrated by the 2D scatter plots in FIG. 4 and FIG. 5.

Next, in step S4, 2D-FEM structural analysis targeting the 2D-FEM analysis model 1 is performed for each assumed load case. For that purpose, computational fluid dynamics (CFD) analysis is performed and thereby a load distribution due to air pressure applied to the aircraft part, such as the main wing, simulated by the FEM analysis model 1 is calculated for each load case, as necessary. In this case, the load applied to each portion of the aircraft part, such as the main wing, under each of various flight states of the aircraft can be obtained for each portion.

Specifically, the deformation amount of the FEM analysis model 1 and the load applied to each element 2 can be obtained for each load case. Since the FEM analysis model 1 is 2D, the load applied to each element 2 is represented by the three component forces consisting of the three component stresses as mentioned above.

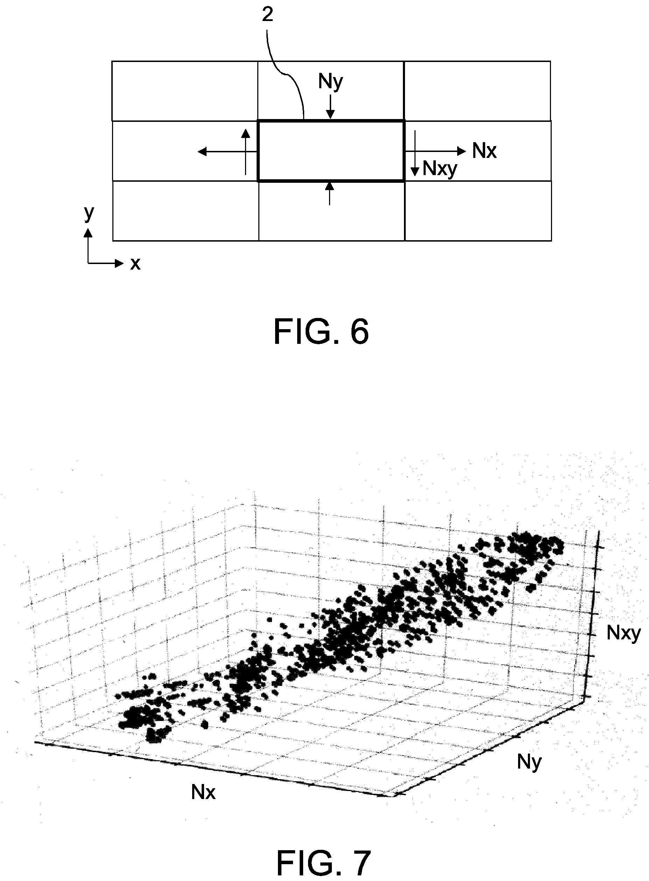

FIG. 6 shows the three component forces (Nx, Ny, Nxy) applied to each element 2 of the FEM analysis model 1 shown in FIG. 2.

As shown in FIG. 6, when the local 2D array directions of the element 2 of interest in the FEM analysis model 1 are defined as the x-axis and the y-axis, the load applied to each element 2 as the three component stresses can be represented by the three component forces consisting of the load Nx applied from the elements 2 adjacent in the x-axis direction, the load Ny applied from the elements 2 adjacent in the y-axis direction, and the load Nxy applied from the adjacent elements 2 in the shear direction in the x-y plane.

If the FEM analysis were to be strictly executed, thousands of load cases as exemplified in FIG. 4 and FIG. 5 would be calculated as many times as the number of the elements 2 in the FEM analysis model 1. Therefore, it is impractical to perform strength calculation of all the elements 2 for all the possible load cases.

For that reason, critical load cases which should be confirmed by the strength calculation are selected from all the possible load cases in order to perform the strength calculation. Nevertheless, it is not easy to quickly select all the critical load cases without omission even with reference to the 2D scatter plots as exemplified in FIG. 4 and FIG. 5.

For that reason, in step S5, the three component forces (Nx, Ny, Nxy) applied to each element 2 in the FEM analysis model 1 are plotted in a 3D coordinate space.

FIG. 7 is a graph showing an example of combinations of the three component forces (Nx, Ny, Nxy) plotted in a 3D coordinate space, corresponding to load cases each applied to the element 2 of interest in the FEM analysis model 1.

As shown in FIG. 7, it is possible to define the 3D coordinate space whose three axial directions are the load Nx applied to the element 2 of interest in the x direction, the load Ny applied in the y direction, and the load Nxy applied in the shear direction in the x-y plane. Then, plotting the combinations of the three component forces (Nx, Ny, Nxy), corresponding to the thousands of the load cases, in the 3D coordinate space yields a 3D scatter plot. That is, 3D point cloud data consisting of thousands of points representing the combinations of the three component forces (Nx, Ny, Nxy) are obtained.

Nevertheless, it is not still easy to quickly select all the critical load cases without omission even when a designer of the aircraft part refers to the 3D scatter plot and the 3D point cloud data.

For that reason, in step S6, a 3D convex hull of the 3D point cloud data is obtained. The 3D convex hull is the smallest convex polyhedron that contains all the points included in the 3D point cloud data. Algorithms for obtaining the 3D convex hull are known and software products for obtaining the 3D convex hull are commercially available.

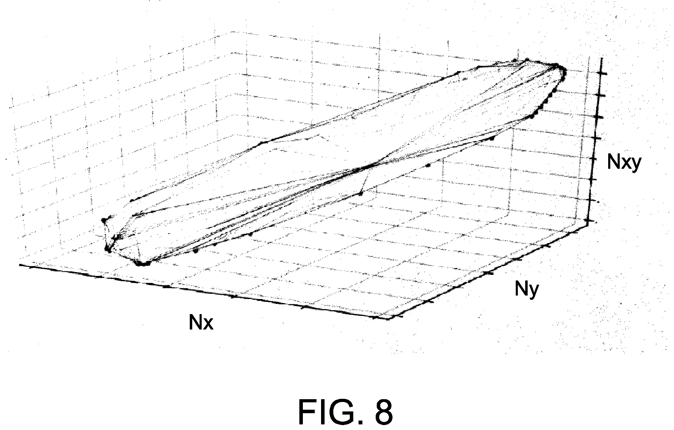

FIG. 8 is a graph showing an example of obtaining the 3D convex hull of the point cloud data consisting of the three component forces (Nx, Ny, Nxy) shown in FIG. 7.

Calculating the 3D convex hull as shown in FIG. 8 allows specifying the points lying in the outermost shell of the 3D point cloud data. That is, the respective points on the vertices of the 3D convex hull can be extracted as the points lying in the outermost shell of the 3D point cloud data.

Each of the points on the vertices of the 3D convex hull, i.e., each of the points lying in the outermost shell of the 3D point cloud data corresponds to a case where one of the three component forces (Nx, Ny, Nxy) becomes maximum or minimum when the other two component forces are constant, i.e., in a one-dimensional scatter plot.

Therefore, when a point representing a combination of the three component forces (Nx, Ny, Nxy) is on a vertex of the 3D convex hull, it can be considered that at least one of the three component forces (Nx, Ny, Nxy) is a critical value for distinguishing whether the corresponding load case is critical. That is, the combinations of the three component forces (Nx, Ny, Nxy) on the vertices of the 3D convex hull can be regarded as the critical load cases.

For that reason, in step S7, the load cases corresponding to the vertices of the 3D convex hull, i.e. the load cases corresponding to the points lying on the outermost shell of the 3D point cloud data are selected as the critical load cases for strength calculation.

Since the 3D convex hull is obtained for each element 2 in the FEM analysis model 1, a set of critical load cases is also selected for each element 2. Therefore, as long as a point represented by a combination of the three component forces (Nx, Ny, Nxy) lies on the outermost shell of the 3D point cloud data corresponding to at least one of the elements 2, i.e., at least one of the three component forces (Nx, Ny, Nxy) is a critical value corresponding to at least one of the elements 2, the corresponding load case is a critical load case. As long as the points lying on the outermost shell of the 3D point cloud data can be specified, it is not essential to obtain the mathematical formula of the 3D convex hull or display the 3D convex hull as an image on a display.

In this way, the combinations of values of the three component forces (Nx, Ny, Nxy) corresponding to the points plotted on the outermost shell of point cloud, formed in the 3D coordinate space in a case where the combinations of the values of the three component forces (Nx, Ny, Nxy) representing the loads that may act on each element 2 in the FEM analysis model 1 are plotted, can be extracted as the critical combinations. For that purpose, it is possible to define the 3D coordinate space whose three axial directions are the directions in which the values of the three component forces (Nx, Ny, Nxy) vary.

Note that, the critical load cases were actually selected from the possible load cases in the main wing of the aircraft by extracting the points located on the outermost shell of the point cloud data with calculating the 3D convex hull. As a result, it was confirmed that about 100 critical load cases could be selected from about 2000 load cases.

When the selection of the critical load cases is completed, the strength calculation of each element 2 is performed only for the critical load cases, in step S8.

Any aircraft part is required to have strength within an allowable range even when an ultimate load is applied. The ultimate load is a load obtained by multiplying a limit load, which is the maximum load expected to be applied to an aircraft part during operation of an aircraft, by a safety factor of 1.5. That is, it is required to give necessary strength margins to each portion of an aircraft part by setting a safety factor. Therefore, calculating the strength margins in the elements 2 of the FEM analysis model 1 allows evaluating whether the strengths of the elements 2 are sufficient respectively.

Accordingly, the strength margins of each element 2 in the FEM analysis model 1 are calculated. The strength of each portion of an aircraft part is represented by evaluation parameters including a compressive buckling load, a shear buckling load, a load that causes crippling fracture (local buckling), an Euler buckling load (long column buckling load) and a strength of a material, except for a case of performing a special design, such as a post-buckling design that allows an FRP to buckle under a load not more than the ultimate load. A buckling load is a load that causes buckling. A strength of a material can be expressed as yield stresses of the material, including a compressive yield stress, a tensile yield stress, a shear yield stress and a yield stress by face pressure.

Therefore, the strength margin of each element 2 is calculated for each evaluation parameter. That is, the strength margin regarding each evaluation parameter value of the strength given to each element 2 is calculated for each of loads represented by the three component forces (Nx, Ny, Nxy) corresponding to the critical load cases.

Then, in step S9, it is determined whether each of the strength margins of the elements 2 in the FEM analysis model 1 is within an allowable range, specifically, whether each of the safety factors for all the critical load cases is not less than a lower limit. That is, whether the strength of each element 2 of the FEM analysis model 1 is within an allowable range is confirmed only in cases where combinations of the three component forces (Nx, Ny, Nxy) representing the loads that may act on each element 2 are the critical combinations.

When at least one strength margin of at least one element 2 is insufficient for at least one critical load case, a design change is required to increase the strength of that element 2. In this case, the design parameters are set again in step S1. Then, the operations and processes, including the FEM structural analysis, from step 2 to step 8 are performed again.

On the other hand, when it is confirmed that all the strength margins of the elements 2 are sufficient for all the critical load cases, the set design parameters are determined as the design information for the aircraft part, in step S10. That is, the design information of the aircraft part is finalized.

In this way, when creation of the design information and strength calculation of the aircraft part is performed by the FEM analysis targeting the FEM analysis model 1, the strengths of the elements 2 in the FEM analysis model 1 can be determined so that the strength of each element 2 may be within an allowable range under any load that can act on each element 2.

Therefore, even when at least a part of the aircraft part is made of an FRP, simulating the aircraft part at least partially made of the FRP with the FEM analysis model 1, and then selecting the appropriate critical load cases for each element 2 allow determining anisotropic strength of each element 2 that simulates a portion made of the FRP. In other words, the critical load cases can be properly selected by dividing the aircraft part into the elements 2 even when at least one of the materials is an FRP.

When the design information of the aircraft part is determined, the aircraft part can be produced based on the design information of the aircraft part, in step S11.

As described above, the method of designing an aircraft part includes not only calculating the strengths of the elements 2 of the aircraft part by FEM structural analysis, but also limiting the load cases, for which the strength calculation should be performed, to the critical load cases where combinations of the three component forces applied to the elements 2 are critical, by calculating the 3D convex hulls and the like. Meanwhile, in the method of producing an aircraft part, the aircraft part is produced based on the design information for the aircraft part created by the above-mentioned designing method.

### (Effects)

According to the method of designing an aircraft part and the method of producing an aircraft part, strength calculation of the aircraft part for unmeaning load cases can be made unnecessary. In particular, calculating the 3D convex hull of the 3D point cloud data representing a large number of load cases allows selecting the critical load cases, for each of which the strength calculation of the aircraft part should be performed, with high accuracy and efficiency. That is, the minimum necessary critical load cases can be quickly identified by calculation. As a result, it is possible to easily secure the safety of the aircraft.

In addition, since the 3D point cloud data for selecting the critical load cases are not the point cloud data consisting of the three component forces (S, M, T) applied to the aircraft part, but the point cloud data consisting of the three component forces (Nx, Ny, Nxy) applied to each 2D arrayed element 2 in the 2D-FEM analysis model 1, it is possible to quickly calculate the strength margins of each element 2 based on the values of the three component forces (Nx, Ny, Nxy).

## Claims

1. A method of designing an aircraft part comprising:
simulating the aircraft part to be designed with a finite element method analysis model consisting of elements; and
creating design information for the aircraft part by determining strengths of the elements by finite element method analysis targeting the finite element method analysis model, each of the strengths of the elements being within an allowable range even when any of possible loads is applied to each of the elements,
wherein the possible loads are represented by combinations of three component forces by using the finite element method analysis model in which the elements are arrayed in two-dimensional directions, and
wherein whether the each of the strengths of the elements is within the allowable range is confirmed only in cases where the combinations of the three component forces are critical combinations.

2. The method of designing the aircraft part according to claim 1,
wherein the cases where the combinations of the three component forces are the critical combinations are determined to cases where at least one of the three component forces becomes a critical value in at least one of the elements.

3. The method of designing the aircraft part according to claim 1 or 2,
wherein the critical combinations are determined to combinations of three component force values corresponding to points plotted on an outermost shell of a point cloud formed in a three-dimensional coordinate space of which three axes represent values of the three component forces when the combinations of the three component forces representing the possible loads are plotted in the three-dimensional coordinate space.

4. The method of designing the aircraft part according to any one of claims 1 to 3,
wherein the aircraft part at least partially made of a fiber reinforced plastic having an anisotropic strength distribution is simulated by the finite element method analysis model, and
an anisotropic strength is determined for each element simulating a portion made of the fiber reinforced plastic.

5. A method of producing the aircraft part, comprising:
producing the aircraft part based on the design information created by the method of designing the aircraft part according to any one of claims 1 to 4.
